# EUROPEAN PATENT SPECIFICATION

(11) **EP 2 072 291 B1**
(45) Date of publication and mention of the grant of the patent: **21.08.2013**
(21) Application number: 08170906.5
(22) Date of filing: 08.12.2008
(51) Int. Cl.: B60C 23/04

(54) **Tire with integral sensor mount**
Reifen mit integraler Sensorhalterung
Pneu avec assemblage de capteur intégral

(30) Priority: 18.12.2007 US 14462 P
(43) Date of publication of application: 24.06.2009
(73) Proprietor: The Goodyear Tire & Rubber Company, Akron, OH 44316-0001 (US)
(72) Inventor: Lionetti, Robert Edward, 7227 Bereldange (LU); Agostini, Giorgio, 7733 Colmar-Berg (LU); Schmitz, Frank, 7782 Bissen (LU); Markoff, Michael Spiro, 1870 Luxembourg (LU)
(74) Representative: Kutsch, Bernd

(56) References cited:
- EP-A2- 1 223 056
- DE-A1-102005 023 974
- US-A1- 2007 146 124
- US-A1- 2007 251 620

## Description

### Background of the Invention

It is useful in myriad commercial product applications to embed a sensing device into a rubber article for the purpose of sensing a physical parameter of the article. One such application is the incorporation of a relatively rigid RFID transponder into a tire in order to detect and measure the pressure within the tire and communicate the pressure level to an external reader. It is also common to employ annular apparatus, including an antenna, for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data.

Such sensing devices may be mounted to the tire using various methods. One way of attaching such systems is to do so by mounting them to cured tire innerliners using various adhesive bonding methods. Bonding to the tire's inner liner surface presents a few issues. Adhesive systems require a clean surface. The surface of the inner liner is typically coated with silicon containing curing bladder release agents which require controlled removal with solvents and subsequent grinding to remove the affected layer. Neither of these process steps is desirable in the tire manufacturing process. Such cleaning processes also are not automated easily given the variation of the contaminated layer.

It would be useful then to have a tire with a sensing device with an improved mount.

US-A- 2007/0146124 describes a tire in accordance with the preamble of claim 1. Such a tire is also described in EP-A- 1 223 056.

### Summary of the Invention

The present invention is directed to a pneumatic tire according to claim 1.

Dependent claims refer to preferred embodiments of the invention.

### Brief Description of the Drawings

The invention will be more readily understood with respect to the accompanying drawings wherein:
FIG. 1 is a cross-sectional view of one embodiment of a tire having a foamed sensor mount;
FIG. 2 is a perspective view of a tire having a foamed sensor mount; and
FIG. 3 is a cross-sectional view of a sensor mounted in the foamed sensor mount.

### Description of the Invention

In one embodiment of the present invention, there is provided a pneumatic tire comprising two spaced inextensible beads, a ground contacting tread portion, a pair of individual sidewalls extending radially inward from the axial outer edges of said tread portion to join the respective beads, the axial outer edges of the tread portion defining a tread width, a supporting carcass for the tread portion and sidewalls, an innerliner disposed radially inward of the carcass, and an electronic sensor mounted in a foamed sensor mount disposed radially inwardly of the innerliner and exposed to the inner cavity of the tire, the foamed sensor mount comprising a foamed rubber composition co-vulcanized and integral with the innerliner, the foamed rubber composition having a density ranging from 0.1 to 1 g/cm³.

The integral sensor mount can be disposed in various inner portions of the tire. For example it can be positioned axially centrally or proximate to a bead, depending on for example the particular sensor to be mounted.

The sensor mount is co-vulcanized with the tire in order to be integral with the dynamic tire construction. It is built as a solid unvulcanized layer containing a heat activatable blowing agent onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. The foamed sensor mount is formed by heat activating the blowing agent during the vulcanization process to simultaneously expand said adherent solid layer. Typical vulcanization temperatures range from 90°C to 200°C. Thus, the foamed sensor mount is formed substantially simultaneously with the co-vulcanization step in order to enhance the integral tire construction. The foamed sensor mount itself is therefore integral with the tire construction, instead of being a simple laminate that is glued or otherwise attached to a previously cured tire.

The integral foamed sensor mount of the tire is of such a size as to not occupy any substantial inner portion of the inflated tire. Generally, its length, width and thickness are sufficient to provide an adequate mount for a sensor.

In order to obtain adequate sensor support by the foamed sensor mount in the tire, the foamed structure has a density or density and porosity in ranges suitable to support a mounted sensor.

In one embodiment, the foamed sensor mount has a density ranging from 0.1 to 1 g/cm³. This density is for the foamed, fully loaded compound, including elastomers and additives such as carbon black, silica, zinc oxide, curatives and oils. In another embodiment, the foamed sensor mount has a density ranging from 0.2 to 0.9 g/cm³. In another embodiment, the foamed sensor mount has a density ranging from 0.2 to 0.8 g/cm³ such as 0.3 g/cm³ or 0.6 g/cm³.

In one embodiment, the foamed sensor mount has a porosity ranging from 20 to 80 percent by volume. In another embodiment, the foamed sensor mount has a porosity ranging from 30 to 70 percent by volume. As defined in the present invention, porosity is the fraction of the total volume of the foamed sensor mount not occupied by the rubber compound. In other words, the porosity is the volume fraction of the foamed sensor mount occupied by void space in the pores and cells formed by the foaming agent.

The foamed sensor mount is foamed with a blowing agent. The blowing agents used in the practice of this invention for the manufacture of the pneumatic tire are those which liberate gases upon heating. Representative examples of such agents are those which liberate gases such as nitrogen or carbon dioxide and cause the formation of the integral closed cell internal layer. Usually agents which liberate nitrogen are preferred. Such blowing agents are compounds which give off gases upon being triggered by the vulcanization temperatures, representative of which are nitro, sulfonyl and azo compounds such as dinitrosopentamethylene tetramine, N,N'-dimethyl-N,N'-dinitrosophthalamide, azodicarbonamide, sulfonyl hydrazides such as benzenesulfonyl hydrazide, toluenesulfonyl hydrazide and p,p'-oxy-bis-(benzenenesulfonyl)hydrazide and sulfonyl semicarbazides such as p-toluene sulfonyl semicarbazide and p,p'-oxy-bis-(benzenesulfonyl semicarbazide). Carbon dioxide may be given off by compounds such as ammonium bicarbonate and sodium bicarbonate.

In order to obtain the desired density and porosity in the foamed sensor mount, the amount of blowing agent may vary. In one embodiment, the amount of blowing agent used in the rubber composition of the foamed sensor mount ranges from 5 to 25 phr. In another embodiment, the amount of blowing agent ranges from 10 to 25 phr.

The vulcanized rubber tire and the co-vulcanized integral foamed sensor mount can be of various cured or vulcanized rubbers such as natural rubber and synthetic rubber and their mixtures or blends. For example, they can be rubbery styrene-butadiene copolymers, butadiene-acrylonitrile copolymers, cis-1,4-polyisoprene, polybutadiene, isoprene-butadiene copolymers, butyl rubber, halogenated butyl rubber such as chloro or bromo butyl rubber, ethylene-propylene copolymers, ethylene-propylene-diene terpolymers and polyurethane elastomers. Typically the various polymers are cured or vulcanized by normal curing methods and recipes such as with sulfur, or with peroxides in the case of the ethylene-propylene copolymers, or with primary diamines in the case of polyurethane elastomers. The sulfur cured or vulcanized natural rubber and synthetic rubbery polymers are preferred such as styrene-butadiene rubber, cis-1,4-polyisoprene, polybutadiene, butyl rubber, chlorobutyl rubber, and bromobutyl rubber.

It is readily understood by those having skill in the art that the rubber compositions used in the integral foamed sensor mount would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. Typical additions of carbon black comprise 20 to 200 parts by weight per 100 parts by weight of diene rubber (phr), preferably 50 to 100 phr.

A number of commercially available carbon blacks may be used. Included in the list of carbon blacks are those known under the ASTM designations N299, S315, N326, N330, M332, N339, N343, N347, N351, N358, N375, N539, N550 and N582. Processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 80 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amounts (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods, which will be readily apparent to those having skill in such art. As noted previously herein, the foamed sensor mount is co-vulcanized with the tire in order to be integral with the dynamic tire construction. It is built as a solid unvulcanized layer containing the heat activatable blowing agent onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. The foamed sensor mount is formed by heat activating said blowing agent during the vulcanization process to simultaneously expand said adherent solid layer. Typical vulcanization temperatures range from 90°C to 200°C. Thus, the foamed sensor mount is formed substantially simultaneously with the co-vulcanization step in order to enhance the integral tire construction. To do this, an unshaped and unvulcanized tire is built around a tire building drum by first building over the drum an inner layer of rubber composition comprising the blowing agent and an innerliner. Over this initial layer of rubber the remainder of the tire is built including the lay-up of the rubberized fabric plies, bead portions, sidewall and tread. The fabricated tire is then removed from the building form and shaped, molded and vulcanized in the tire.

The specially compounded rubber expands as the blowing agent is heat activated during the vulcanization process to form the foamed sensor mount. However, this expansion is suppressed during the tire molding by the presence of the shaping bladder which presses against the interior of the tire owing to the significant pressure of the bladder. The pressure in the bladder is maintained higher than the pressure of the blowing agent being released in the foamed sensor mount. Once the pressure in the bladder is released, the foamed sensor mount is free to expand to its final conformation, which may include open and/or closed cells.

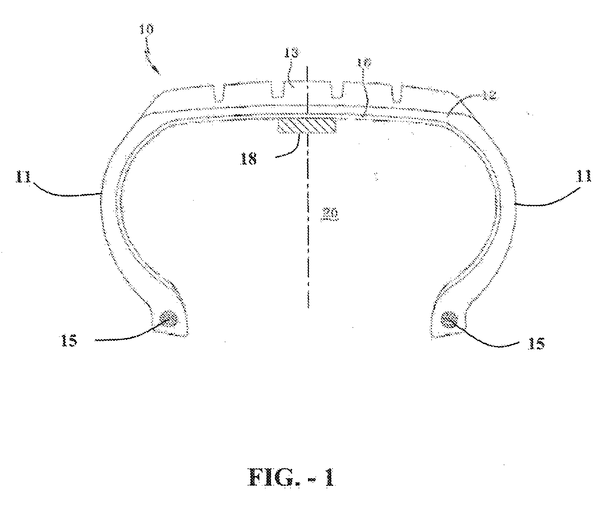

FIG. 1 depicts in cross-section one embodiment of a tire 10 in accordance with the present invention. Tire 10 includes sidewalls 11 and a carcass 12 having a tread 13 disposed on the outermost surface, which tread 13 is the portion of the tire 10 that contacts the ground during operation of the tire 10. As is known in the art, the carcass 12 may include one or more plies of cords (not shown) and the carcass wraps the bead portions 15 of the tire. A foamed sensor mount 18 is disposed inside the carcass 12 in air chamber 20. The tire 10 includes innerliner 16 disposed adjacent the carcass 12 and foamed sensor mount 18 disposed adjacent innerliner 16.

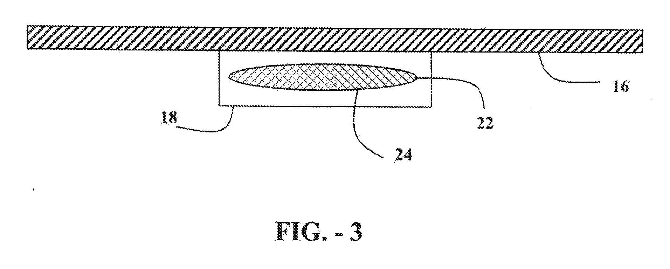

Figure 3 shows a magnified view of foamed sensor mount 18 disposed on the innerliner 16. Sensor 22 is disposed in slit 24 of sensor mount 18. Slit 24 may be formed by cutting into sensor mount 18 after curing, to create a position for insertion of sensor 22. Sensor 22 is then secured within sensor mount 18 and is retained within the sensor mount 18 by the elasticity of the foamed rubber composition.

While sensor mount 18 as shown in the drawings is shown idealized with relatively square edges and corners, it is to be understood that in practice such foamed, molded shapes typically show more rounded features.

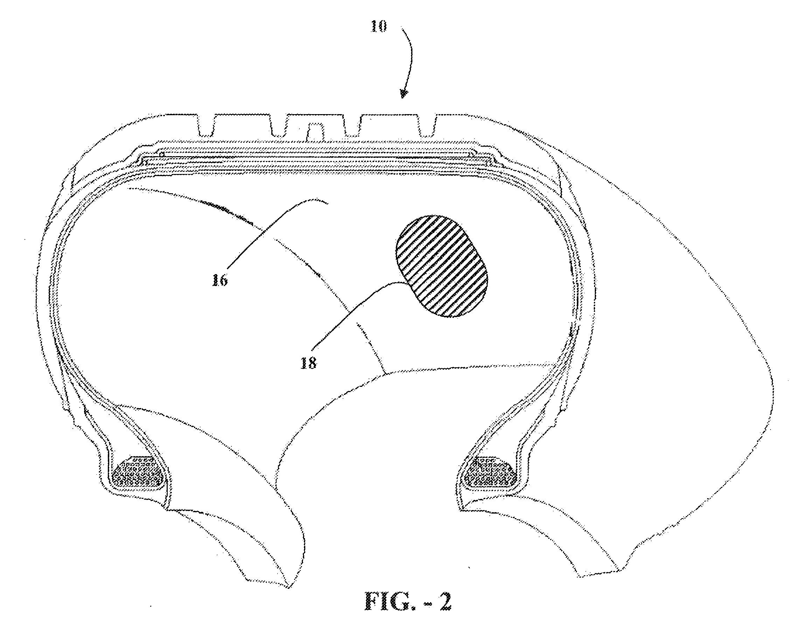

In alternate embodiments not shown, the foamed sensor mount may take forms other than that shown in Figures 1-3. For example, the sensor mount may include a cavity open to the air chamber of the tire. In this embodiment, the sensor may be secured within the cavity. In another embodiment, the sensor mount may comprise one or more mounting pins. In this embodiment, the sensor may be secured to the mounting pins by fitting one or more mounting holes in the sensor to the mounting pins, with the mounting pins inserted into the mounting holes.

## Claims

1. A pneumatic tire comprising two spaced beads (15), a tread portion (13), a pair of individual sidewalls (11) extending radially inward from the axial outer edges of said tread portion (13) to join the respective beads, the axial outer edges of the tread portion (13) defining a tread width, a supporting carcass (12) for the tread portion (13) and the sidewalls (11), an innerliner (16) disposed radially inward of the carcass (12), and an electronic sensor (22) mounted in a sensor mount (18) disposed radially inwardly of the innerliner (16) and exposed to the inner cavity (20) of the tire (10), **characterized in that** the sensor mount (18) comprises a foamed rubber composition co-vulcanized and integral with the innerliner (16), the foamed rubber composition having a density ranging from 0.1 to 1 g/cm³.

2. The pneumatic tire of claim 1, wherein the foamed rubber composition has a density ranging from 0.2 to 0.9 g/cm³.

3. The pneumatic tire of claim 1 or 2, wherein the foamed rubber composition has a density ranging from 0.2 to 0.8 g/cm³.

4. The pneumatic tire of at least one of the previous claims, wherein the sensor mount (18) comprises a slit (24) into which the sensor (22) is inserted.

5. The pneumatic tire of at least one of the previous claims, wherein the sensor mount (18) is substantially centered axially on the axial centerline of the tire.

6. The pneumatic tire of at least one of the previous claims, wherein the foamed rubber composition has a porosity ranging from 20 to 80 percent by volume.

7. The pneumatic tire of claim 6, wherein the foamed rubber composition has a porosity ranging from 30 to 70 percent by volume.

8. The pneumatic tire of at least one of the previous claims, wherein the sensor mount (18) comprises a cavity exposed to the air chamber (20) of the tire, wherein the sensor (22) is mounted in the cavity.

9. The pneumatic tire of at least one of the previous claims, wherein the sensor mount (18) comprises one or more mounting pins onto which the sensor (22) is mounted.

## Patentansprüche

1. Luftreifen, umfassend zwei beabstandete Wülste (15), einen Laufflächenteil (13), ein Paar individuelle Seitenwände (11), die sich von den axialen Außenrändern des Laufflächenteils (13) radial einwärts erstrecken, um an den jeweiligen Wulsten anzuschließen, wobei die axialen Außenränder des Laufflächenteils (13) eine Laufflächenbreite definieren, eine tragende Karkasse (12) für den Laufflächenteil (13) und die Seitenwände (11), eine radial einwärts von der Karkasse (12) angeordnete Innenisolierung (16), und einen elektronischen Sensor (22), der in einer Sensorhalterung (18) montiert ist, die radial einwärts von der Innenisolierung (16) angeordnet ist und zur dem inneren Hohlraum (20) des Reifens (10) hin freiliegt, **dadurch gekennzeichnet, dass** die Sensorhalterung (18) eine aufgeschäumte Kautschukzusammensetzung umfasst, die covulkanisiert und integral mit der Innenisolierung (16) ist, wobei die aufgeschäumte Kautschukzusammensetzung eine sich auf 0,1 bis 1 g/cm³ belaufende Dichte aufweist.

2. Luftreifen nach Anspruch 1, wobei die aufgeschäumte Kautschukzusammensetzung eine sich auf 0,2 bis 0,9 g/cm³ belaufende Dichte aufweist.

3. Luftreifen nach Anspruch 1 oder 2, wobei die aufgeschäumte Kautschukzusammensetzung eine sich auf 0,2 bis 0,8 g/cm³ belaufende Dichte aufweist.

4. Luftreifen nach mindestens einem der vorgenannten Ansprüche, wobei die Sensorhalterung (18) einen Schlitz (24) umfasst, in den der Sensor (22) eingefügt ist.

5. Luftreifen nach mindestens einem der vorgenannten Ansprüche, wobei die Sensorhalterung (18) im Wesentlichen axial auf der axialen Mittellinie des Reifens zentriert ist.

6. Luftreifen nach mindestens einem der vorgenannten Ansprüche, wobei die aufgeschäumte Kautschukzusammensetzung eine sich auf 20 bis 80 Volumenprozent belaufende Porosität aufweist.

7. Luftreifen nach Anspruch 6, wobei die aufgeschäumte Kautschukzusammensetzung eine sich auf 30 bis 70 Volumenprozent belaufende Porosität aufweist.

8. Luftreifen nach mindestens einem der vorgenannten Ansprüche, wobei die Sensorhalterung (18) einen Hohlraum aufweist, der zu der Luftkammer (20) des Reifens hin freiliegt, wobei der Sensor (22) in dem Hohlraum montiert ist.

9. Luftreifen nach mindestens einem der vorgenannten Ansprüche, wobei die Sensorhalterung (18) einen oder mehrere Montagestifte umfasst, worauf der Sensor (22) montiert ist.

## Revendications

1. Bandage pneumatique comprenant deux talons espacés (15), une portion de bande de roulement (13), une paire de flancs individuels (11) s'étendant en direction radiale vers l'intérieur à partir des bords externes axiaux de ladite portion de bande de roulement (13) pour joindre les talons respectifs, les bords externes axiaux de la portion de bande de roulement (13) définissant une largeur de bande de roulement, une carcasse de support (12) pour la portion de bande de roulement (13) et les flancs (11), un calandrage intérieur (16) disposé en direction radiale à l'intérieur de la carcasse (12), et un capteur électronique (22) monté dans un support de capteur (18) qui est disposé en direction radiale à l'intérieur du calandrage intérieur (16) et qui est exposé à la cavité interne (20) du bandage pneumatique (10), **caractérisé en ce que** le support de capteur (18) comprend une composition de caoutchouc transformé en mousse covulcanisé avec du calandrage intérieur (16) et faisant partie intégrante de ce dernier, la composition de caoutchouc transformé en mousse possédant une masse volumique qui se situe dans la plage de 0,1 à 1 g/cm³.

2. Bandage pneumatique selon la revendication 1, dans lequel la composition de caoutchouc transformé en mousse possède une masse volumique qui se situe dans la plage de 0,2 à 0,9 g/cm³.

3. Bandage pneumatique selon la revendication 1 ou 2, dans lequel la composition de caoutchouc transformé en mousse possède une masse volumique qui se situe dans la plage de 0,2 à 0,8 g/cm³.

4. Bandage pneumatique selon au moins une des revendications précédentes, dans lequel le support de capteur (18) comprend une fente (24) dans laquelle vient s'insérer le capteur (22).

5. Bandage pneumatique selon au moins une des revendications précédentes, dans lequel le support de capteur (18) est essentiellement centré en direction axiale sur la médiane axiale du bandage pneumatique.

6. Bandage pneumatique selon au moins une des revendications précédentes, dans lequel la composition de caoutchouc transformé en mousse possède une porosité qui se situe dans la plage de 20 à 80 % en volume.

7. Bandage pneumatique selon la revendication 1, dans lequel la composition de caoutchouc transformé en mousse possède une porosité qui se situe dans la plage de 30 à 70 % en volume.

8. Bandage pneumatique selon au moins une des revendications précédentes, dans lequel le support de capteur (18) comprend une cavité exposée à la chambre à air (20) du bandage pneumatique, le capteur (22) étant monté dans la cavité.

9. Bandage pneumatique selon au moins une des revendications précédentes, dans lequel le support de capteur (18) comprend une ou plusieurs broches de montage sur lesquelles est monté le capteur (22).
